# FASCICULE DE BREVET EUROPEEN

(11) **EP 3 942 200 B1**
(45) Date de publication et mention de la délivrance du brevet: **12.06.2024**
(21) Numéro de dépôt: 20713848.8
(22) Date de dépôt: 12.03.2020
(51) Int. Cl.: F16H 59/02, F16H 59/10

(54) **DISPOSITIF DE GESTION DES VITESSES**
SCHALTVORRICHTUNG
SHIFTING DEVICE

(30) Priorité: 21.03.2019 FR 1902908
(43) Date de publication de la demande: 26.01.2022
(73) Titulaire: Renault s.a.s, 92100 Boulogne Billancourt (FR)
(72) Inventeur: GROUAS, Florian, 92370 Chaville (FR); TRITONI, Antoine, 78160 Marly le roi (FR)
(74) Mandataire: Renault Group
(86) Numéro de dépôt international: PCT/EP2020/056655
(87) Numéro de publication internationale: WO 2020/187687

(56) Documents cités:
- WO-A1-2016/137497
- DE-A1-102015 221 715
- US-A1- 2012 085 193

## Description

La présente invention se rapporte à un dispositif de gestion des vitesses.

Dans le domaine automobile, il est bien connu que les rapports de transmission, aussi appelés vitesses, d'un véhicule automobile peuvent être changés soit manuellement par le conducteur, généralement dans le cas d'un véhicule automobile à embrayage manuel, ou automatiquement par le calculateur de bord, dans le cas d'un véhicule automobile à changement de vitesse automatique. On connaît aussi un mode de commande appelé mode séquentiel dans lequel le conducteur contrôle le changement de vitesse sans qu'il ne lui soit nécessaire d'agir sur l'embrayage du véhicule automobile.

Dans les véhicules connus de l'art antérieur, à changement de vitesses manuels et automatiques, il est connu d'utiliser un dispositif de gestion des vitesses appelé levier de vitesse.

Dans le mode de commande séquentiel, aussi appelé en anglais *Shift By Wire,* le levier de vitesse est fréquemment, mais non nécessairement, remplacé par un organe communément appelé *switcher.*

On parle alors fréquemment de levier de type *Shifter électronisé* ou plus simplement *Shifter.* Un *Shifter* est un dispositif de commande permettant de changer manuellement les rapports de vitesse de manière totalement découplée des parties mécaniques du véhicule automobile, et sans qu'il ne soit nécessaire d'agir sur l'embrayage.

Il est connu de monter un tel *Shifter,* en forme de baguette formant commutateur de commande montées à l'arrière du volant aussi appelée commodo. Ces types de *Shifters* permettent de réduire l'encombrement de l'habitacle par rapport aux leviers de vitesse classiques, et permettent de choisir leur positionnement par rapport au tableau de bord tout en assurant une manipulation plus simple qu'un levier de vitesse d'une boîte de vitesse mécanique classique.

Toutefois les *Shifters* commodo ne sont pas adaptés aux véhicules à passage de vitesse automatique, car l'actionnement accidentel d'un commodo est plus fréquent que celui d'un levier de vitesse monté sur la console de l'habitacle, et dans le cadre d'un passage de vitesse automatique, on souhaite réduire les interactions du conducteur avec le levier de vitesse.

En outre, si les véhicules à passage de vitesses automatique présentent l'avantage d'optimiser les changements de vitesse et permettent de simplifier la conduite pour le conducteur, de nombreux usagers préfèrent conserver la gestion manuelle du changement de vitesses.

En outre, selon les cas, un conducteur peut préférer tantôt conduire son véhicule automobile selon un mode de fonctionnement à passage de vitesse automatique, tantôt selon un mode de fonctionnement à passage de vitesse séquentiel.

A cet effet, on connaît notamment le document US2012/0085193 décrivant un dispositif en forme de levier adapté pour passer d'un mode de fonctionnement à passage de vitesse automatique à un mode de fonctionnement à passage de vitesse séquentiel. Toutefois un tel dispositif n'est pas ergonomique et présente une structure relativement complexe.

On connait en outre le document WO 2016/137497 qui divulgue un dispositif de gestion des vitesses d'un véhicule automobile selon la préambule de la revendication 1.

On connait en outre le document US 2012/085193 qui divulgue un dispositif différent de l'invention.

Aussi, il existe le besoin d'un véhicule automobile apte à passer d'un mode de fonctionnement à passage de vitesse automatique à un mode de fonctionnement à passage de vitesse séquentiel, tout en présentant un dispositif de gestion des rapports plus simple et plus ergonomique.

On propose un dispositif de gestion des vitesses d'un véhicule selon la revendication 1. Ainsi, on peut obtenir un dispositif de gestion des vitesses de structure relativement simple, et pouvant passer de manière ergonomique et robuste entre ses deux positions. Ceci permet en particulier d'obtenir un levier de vitesse pouvant être actionné de manière similaire à un levier de vitesse d'un véhicule automobile à passage de vitesse automatique.

Selon l'invention le dispositif comprend un rail solidaire de ladite embase, ledit levier étant monté libre en translation sur ledit rail. Ceci permet d'obtenir une structure relativement simple et robuste du dispositif.

Avantageusement et de manière non limitative, ladite translation est orientée le long d'un axe longitudinal, assurant une meilleure ergonomie pour le conducteur habitué aux véhicules à passage de vitesse automatique.

Avantageusement et de manière non limitative, dans une deuxième position, distincte de ladite première position choisie parmi la position dans laquelle l'organe de sélection commande le fonctionnement à changement de vitesse automatique, à une position dans laquelle l'organe de sélection commande le fonctionnement en mode à changement de vitesse séquentiel, le levier de changement de vitesse est libre en rotation par rapport à l'embase autour d'un autre axe de rotation, distinct dudit axe d'extension.

Ceci permet notamment d'obtenir un levier de vitesse pouvant être actionné de manière similaire à un levier de vitesse d'un véhicule automobile à passage de vitesse séquentiel.

Avantageusement et de manière non limitative, ledit levier est monté sur une rotule à doigt coopérant avec ladite embase de sorte à guider en rotation ledit levier autour dudit autre axe de rotation. Ceci permet d'obtenir une structure relativement simple et robuste du dispositif.

Avantageusement et de manière non limitative, ladite rotation dudit levier autour de son axe d'extension comprend une rotation de 90°. Ainsi le passage de la première position à la deuxième position est relativement simple et rapide. Avantageusement et de manière non limitative, le dispositif comprend en outre un organe de déverrouillage dudit organe de sélection, ledit organe de sélection étant libre en rotation autour de l'axe d'extension lorsque ledit moyen de déverrouillage est actionné. Ainsi, le dispositif est plus sécurisé et évite une modification accidentelle du mode de fonctionnement.

Avantageusement et de manière non limitative, ledit organe de déverrouillage comprend un commutateur électronique, tel qu'un bouton poussoir, est monté sur ledit organe de sélection. Ceci permet d'avoir un déverrouillage relativement simple et peu coûteux, et permet d'avoir un accès simple et ergonomique à cet organe de déverrouillage par le conducteur.

L'invention concerne aussi un véhicule automobile apte à fonctionner selon un mode de fonctionnement à changement de vitesse séquentiel et selon un mode de fonctionnement à changement de vitesse automatique, ledit véhicule automobile comprenant un dispositif de gestion des vitesses selon l'une quelconque des revendications 1 à 6.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique du dessus des deux positions du dispositif selon le mode de réalisation principal de l'invention ;
[Fig. 2] est un ensemble de vues de côté du dispositif, dans les deux positions, selon la figure 1 ; et

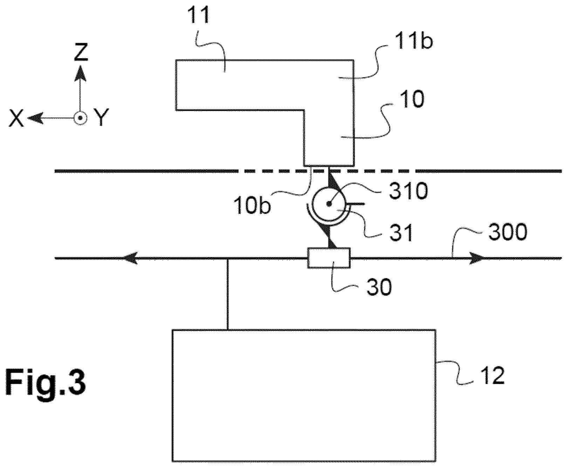

[Fig. 3] est une vue schématique, de côté, d'un dispositif selon le mode de réalisation de la figure 1.

La présente description fera référence à un repère orthonormal XYZ, dans lequel l'axe X correspondant à la direction longitudinale du véhicule automobile, de l'avant vers l'arrière, l'axe Z correspondant à la direction verticale, du bas vers le haut, et l'axe Y correspondant à la direction transversale du véhicule automobile, orienté de sorte à former un repère orthonormal.

Un véhicule automobile, non représenté, est apte à pour pouvoir fonctionner selon un mode à changement de vitesse automatique, dans lequel les rapports de transmissions sont automatiquement adaptés par un calculateur embarqué du véhicule automobile, et selon un mode à changement de vitesse séquentiel, dans lequel le conducteur gère lui-même les changements de vitesse sans qu'il ne lui soit nécessaire d'agir sur l'embrayage.

Afin de permettre un changement aisé et sécurisé du mode de fonctionnement du véhicule, automatique ou séquentiel, le véhicule comprend un dispositif de gestion 1 des vitesses comprenant un levier de changement de vitesse 10 coopérant, à une extrémité de fixation, avec des organes de mobile 30, 31 montés sur un support principal 12, par exemple sur une embase 12 de la console de l'habitacle du véhicule automobile.

Ce levier 10 comprend en outre à son extrémité libre 10a un organe de sélection 11.

Le levier 10 s'étend selon une direction principale Z, généralement selon la direction verticale Z par rapport au véhicule automobile, lorsque le levier 10 est monté sur la console de l'habitacle.

Bien que la direction principale Z du levier soit la direction la plus communément rencontrée dans les véhicules automobiles modernes, on peut aussi prévoir l'installation du levier selon tout autre axe principal d'extension adapté, par exemple horizontalement, l'invention pouvant être simplement adaptée par un changement de repère pour tous les éléments décrits ci-après.

L'organe de sélection 11, correspondant dans ce mode de réalisation au pommeau de levier 10 de vitesse, est fixé au levier 10.

Le levier 10 est mobile à rotation par rapport à ladite embase 12, de sorte à ce que ledit organe de sélection 11 puisse passer d'une première position 11a dans laquelle l'organe de sélection 11 commande le fonctionnement à changement de vitesse automatique, à une deuxième position 11b dans laquelle l'organe de sélection 11 commande le fonctionnement en mode à changement de vitesse séquentiel.

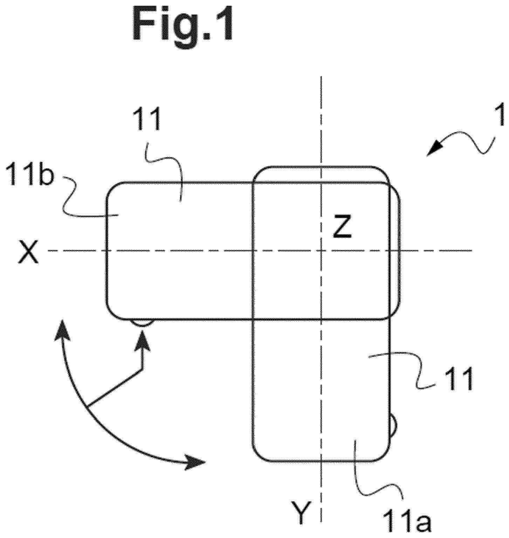

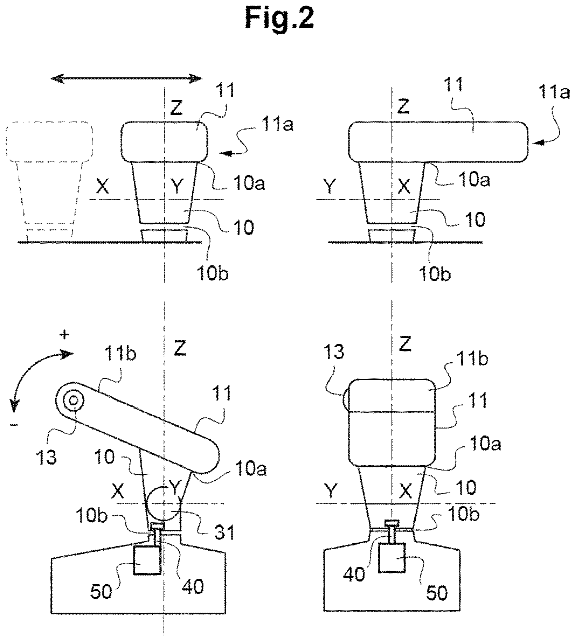

L'invention, qui est définie par les revendications suivantes, n'est pas limitée à l'association du mode de fonctionnement avec sa position respective telle que représenté par les figures 1 et 2. Une position parmi les deux positions 11a, 11b pourra être librement choisie par l'homme du métier pour être associée à un mode de fonctionnement particulier.

Dans ce mode de réalisation, le levier 10 est adapté pour pivoter autour de son axe d'extension principal Z.

Ainsi, par l'intermédiaire de sa liaison fixe avec le levier 10, l'organe de sélection 11 est apte à pivoter autour de l'axe Z d'extension du levier 10 d'une rotation de sensiblement 90° passant de la première 11a à la deuxième 11b position et inversement.

Afin d'interdire une rotation accidentelle de l'organe de sélection 11, le levier 10 est verrouillée au repos, lorsque l'organe de sélection 11 est dans l'une des positions 11a, 11b.

Le verrouillage est assuré par un doigt d'indexage 40 coopérant avec le levier 10 et venant s'engager dans un orifice parmi deux orifices prévus sur l'embase 12. Lorsque le doigt d'indexage 40 associé au levier 10 est inséré dans l'un des orifices de l'embase 12, le levier 10 ne peut pivoter autour de son axe Z pour permettre un changement de mode de fonctionnement du véhicule automobile. Le dispositif 1 selon l'invention comprend un organe de déverrouillage 13 de la rotation du levier 10, ici un bouton poussoir 13 monté sur l'organe de déverrouillage 13 adapté pour permettre le déverrouillage de la position courante, autrement dit permettant de retirer le doigt d'indexage 40 de l'un des trous de l'embase 12, de sorte à pouvoir être pivoté vers une autre position.

Lors du déverrouillage, lorsque l'organe de sélection atteint une autre position 11a, 11b, l'organe de sélection 11 est automatique verrouillé à nouveau par le doigt d'indexage 40.

Selon une alternative de mise en oeuvre on peut prévoir de substituer ou d'associer au doigt d'indexage 40 un système de serrage, par exemple un serrage par fluide ferromagnétique, permettant un contrôle actif du blocage de la rotation du levier 10.

Selon une alternative de mise en oeuvre de l'invention, le déverrouillage peut être maintenu tant que le bouton poussoir 13 est maintenu appuyé.

Dans ce mode de réalisation, le bouton poussoir 13 est monté sur un bord latéral de l'organe de sélection 11, de sorte à être aisément accessible, dans au moins une position 11a, 11b, par le pouce d'un utilisateur dont la main est posée sur l'organe de sélection.

Le bouton poussoir 13 est associé à des moyens de commande adaptés pour recevoir un signal de pression du bouton poussoir 13 et à commander des moyens d'actionnement 50, par exemple un servomoteur 50, permettant un retrait du doigt d'indexage du trou dans lequel il est engagé.

Le doigt d'indexage 40 peut être en outre associé à un ressort hélicoïdal, non représenté, permettant un retour en position de blocage automatique lorsque le doigt d'indexage 40 est en vis-à-vis de l'un des trous de l'embase 12.

Des moyens de limitation de la rotation, telle que des butées permettent de limiter la rotation de l'organe de sélection 11 à cette seule rotation de 90°.

Chaque position 11a, 11b de l'organe de sélection 11 est associée à un mode d'articulation du levier 10 par rapport au support principal 12.

Ainsi, le levier 10 est articulé, par coopération avec les organes mobiles 30, 31, par rapport au support principal 12.

Les organes mobiles 30, 31 comprennent dans ce mode de réalisation une glissière 30, ici et selon l'invention un rail 30 sur lequel le levier 10 est monté libre en translation, guidé par le rail 30.

Ainsi cette glissière 30 permet une translation 300 du levier 10, lorsque l'organe de sélection 11 est dans la première position 11a.

Dans ce mode de réalisation la glissière est orientée selon l'axe longitudinal X de sorte à autoriser une translation du levier 10 de l'avant vers l'arrière du véhicule automobile.

La glissière 30 est dans ce mode de réalisation associée au fonctionnement dit automatique du véhicule automatique, le changement de position du levier, permettant de changer la position de commande automatique parmi les choix habituelles des véhicules automatique, comprenant notamment les positions de Parking P, marche arrière R, point mort N, Conduite D, et toute autre position adaptée.

Les organes mobiles 30, 31 comprennent aussi, dans ce mode de réalisation, une rotule à doigt 31, fixée entre la glissière 30 et le levier, autorisant une rotation 310 du levier 10 autour de l'axe transversal Y, correspondant dans ce mode de réalisation à la direction transversal, lorsque l'organe de sélection est dans la deuxième position 11b.

La rotule à doigt 31 est conformée de sorte à bloquer la glissière 30 lorsque l'organe de sélection est dans la deuxième position 11b.

Dans ce mode de réalisation, la rotule à doigt 31 permet la rotation autour de l'axe 7 ainsi que le mouvement pour les passages de vitesse. Elle bloque la rotation en position longitudinale et elle bloque la translation en position transverse.

Ainsi, le levier 10 est adapté pour pouvoir s'incliner sensiblement vers l'avant ou vers l'arrière par rapport au véhicule automobile.

Dans ce mode de réalisation la rotation 310 autour de l'axe transversal Y est conformée pour permettre un fonctionnement du véhicule automobile en mode manuel, autrement dit avec passage séquentiel des vitesses, et dans lequel le levier est pivoté vers l'avant lors d'une montée de vitesse, et vers l'arrière lors d'une rétrogradation.

Toutefois l'invention n'est pas limitée à cette mise en oeuvre particulière du passage séquentiel de vitesse, et l'axe d'inclinaison ainsi que le sens d'inclinaison pour la montée / rétrogradation des vitesses peut être librement adaptée par l'homme du métier.

Des butées, permettent de limiter l'inclinaison du levier 10 lors de la rotation autour de l'axe transversal Y.

En outre le levier 10 comprend des moyens de rappel apte à permettre un retour automatique en position verticale du levier 10 après qu'une rotation autour de l'axe transversal Y a été appliquée.

Ainsi, le levier présente deux mouvements distincts, translation ou rotation, selon que l'organe de sélection 11 se trouve dans sa première 11a, ou sa deuxième position 11b, ce qui permet d'obtenir pour un même levier 10 et un même pommeau 11, un dispositif de commande apte à permettre le fonctionnement du véhicule automobile tant en mode automatique qu'en mode séquentiel, et ce de manière relativement simple.

## Revendications

1. Dispositif (1) de gestion des vitesses d'un véhicule automobile, ledit véhicule automobile étant apte à passer d'un mode de fonctionnement à changement de vitesse séquentiel à un mode de fonctionnement à changement de vitesse automatique ;
ledit dispositif (1) comprenant un levier (10) de changement de vitesse articulé sur une embase (12), ledit levier (10) de changement de vitesse s'étendant le long d'un axe d'extension (Z) principal, et un organe de sélection (11) du mode de fonctionnement du véhicule automobile, ledit organe de sélection (11) étant solidaire dudit levier (10); le levier (10) est conformé pour pouvoir pivoter autour de son axe d'extension (Z), de sorte que l'organe de sélection (11) puisse passer d'une position (11a) dans laquelle l'organe de sélection commande le fonctionnement à changement de vitesse automatique, à une position (11b) dans laquelle l'organe de sélection (11) commande le fonctionnement en mode à changement de vitesse séquentiel,
et en ce que le levier (10) de changement de vitesse est adapté pour être articulé par rapport à l'embase (12) de telle sorte que dans une première position de l'organe de sélection (11) choisi parmi la position (11a) dans laquelle l'organe de sélection commande le fonctionnement à changement de vitesse automatique ou la position (11b) dans laquelle l'organe de sélection (11) commande le fonctionnement en mode à changement de vitesse séquentiel, le levier (10) de changement de vitesse est libre en translation (300) par rapport à l'embase (12),
**caractérisé en ce que** le dispositif comprend un rail (30) solidaire de ladite embase (12), ledit levier (10) étant monté libre en translation sur ledit rail (30).

2. Dispositif (1) selon la revendication précédente, **caractérisé en ce que** dans une deuxième position, distincte de ladite première position choisie parmi la position (11a) dans laquelle l'organe de sélection commande le fonctionnement à changement de vitesse automatique, à une position (11b) dans laquelle l'organe de sélection (11) commande le fonctionnement en mode à changement de vitesse séquentiel, le levier (10) de changement de vitesse est libre en rotation (310) par rapport à l'embase (12) autour d'un autre axe de rotation (Y), distinct dudit axe d'extension (Z).

3. Dispositif (1) selon la revendication 2, **caractérisé en ce que** ledit levier (10) est monté sur une rotule à doigt (31) coopérant avec ladite embase (12) de sorte à guider en rotation ledit levier (10) autour dudit autre axe de rotation (Y).

4. Dispositif (1) selon l'une quelconque des revendications 1 à 3, **caractérisé en ce que** ladite rotation dudit levier (10) autour de son axe d'extension (Z) comprend une rotation de 90°.

5. Dispositif (1) selon l'une quelconque des revendications 1 à 4, **caractérisé en ce qu'**il comprend en outre un organe de déverrouillage (13) dudit organe de sélection (11), ledit organe de sélection (11) étant libre en rotation autour de l'axe d'extension (Z) lorsque ledit moyen de déverrouillage (13) dudit organe de sélection est actionné.

6. Dispositif (1) selon la revendication 5, **caractérisé en ce que** ledit organe de déverrouillage (13) comprend un commutateur électronique, tel qu'un bouton poussoir, monté sur ledit organe de sélection.

7. Véhicule automobile apte à fonctionner selon un mode de fonctionnement à changement de vitesse séquentiel et selon un mode de fonctionnement à changement de vitesse automatique, ledit véhicule automobile comprenant un dispositif (1) de gestion des vitesses selon l'une quelconque des revendications 1 à 6.

## Patentansprüche

1. Vorricht 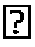 ng (1) z 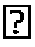 m Verwalten von Gängen eines Kraftfahrze 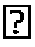 gs, wobei das Kraftfahrze 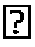 g in der Lage ist, von einem seq 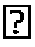 entiellen Gangschaltbetriebsmod 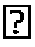 s in einen a 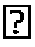 tomatischen Gangschaltbetriebsmod 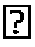 s z 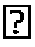 wechseln;
wobei die Vorricht 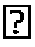 ng (1) einen an einer Basis (12) angelenkten Schalthebel (10), wobei sich der Schalthebel (10) entlang einer Ha 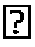 pterstreck 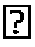 ngsachse (Z) erstreckt, 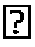 nd ein A 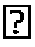 swahlelement (11) z 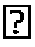 r A 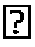 swahl der Betriebsart 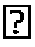 mfasst des Kraftfahrze 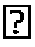 gs, wobei das A 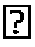 swahlelement (11) fest mit dem Hebel (10) verb 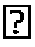 nden ist;
dad 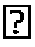 rch gekennzeichnet, dass der Schalthebel (10) so geformt ist, dass er 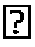 m die Ha 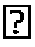 pterstreck 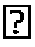 ngsachse (Z) schwenken kann, so dass sich das Wählelement (11) a 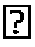 s einer Position (11a) bewegen kann, in der das Wählelement ( 11) ste 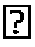 ert den a 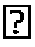 tomatischen Gangschaltvorgang in eine Position (11b), in der das A 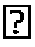 swahlelement (11) den Betrieb im seq 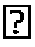 entiellen Gangschaltmod 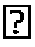 s ste 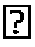 ert, 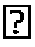
nd dass der Gangschalthebel (10) daz 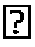 a 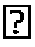 sgelegt ist, in Bez 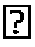 g a 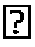 f die Basis (12) angelenkt z 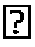 werden, so dass er in einer ersten Position des Wählhebels (11), a 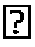 sgewählt a 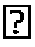 s der Position (11a), in der der Wählhebel den Betrieb ste 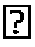 ert, in einem a 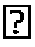 tomatischer Schaltbetriebsmod 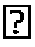 s oder die Position (11b), in der der Wählhebel (11) den Betrieb im seq 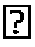 entiellen Schaltbetriebsmod 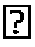 s ste 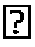 ert, wobei der Schalthebel (10) in Bez 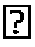 g a 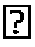 f die Basis (12) frei in der Translation (300) ist, 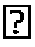
nd dad 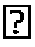 rch, dass es eine Schiene (30) 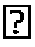 mfasst, die fest mit der Basis (12) verb 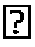 nden ist, wobei der Hebel (10) frei verschiebbar a 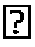 f der Schiene (30) montiert ist.

2. Vorricht 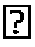 ng (1) nach dem vorhergehenden Anspr 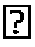 ch, dad 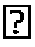 rch gekennzeichnet, dass sie sich in einer zweiten Position befindet, die sich von der ersten Position 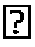 nterscheidet 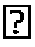 nd a 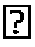 s der Position (11a), in der der Wähler den Betrieb in einem a 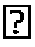 tomatischen Schaltbetriebsmod 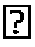 s ste 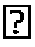 ert, oder der Position (11b) gewählt wird. wobei der Wählhebel (11) den Betrieb im seq 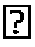 entiellen Schaltbetriebsmod 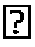 s ste 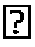 ert, der Gangwechselhebel (10) frei ist, sich relativ z 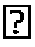 r Basis (12) 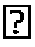 m eine andere Drehachse (Y) z 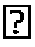 drehen (310), die sich von der Ha 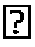 ptachse 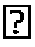 nterscheidet der Verlänger 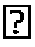 ng (Z).

3. Vorricht 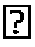 ng (1) nach Anspr 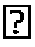 ch 2, dad 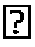 rch gekennzeichnet, dass der Hebel (10) a 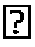 f einem Fingerk 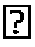 gelgelenk (31) montiert ist, das mit der Basis (12) z 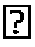 sammenwirkt, 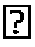 m den Hebel (12) in Dreh 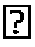 ng 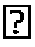 m die andere z 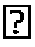 führen Drehachse (Y).

4. Vorricht 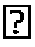 ng (1) nach einem der Ansprüche 1 bis 3, dad 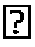 rch gekennzeichnet, dass die Dreh 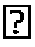 ng des Hebels (10) 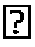 m seine Erstreck 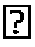 ngsachse (Z) eine Dreh 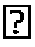 ng von 90° 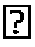 mfasst.

5. Vorricht 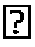 ng (1) nach einem der Ansprüche 1 bis 4, dad 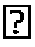 rch gekennzeichnet, dass sie a 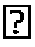 ßerdem ein Entriegel 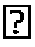 ngselement (13) des A 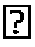 swahlelements (11) 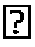 mfasst, wobei sich das A 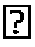 swahlelement (11) frei 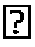 m die A 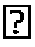 sfahrachse drehen kann (Z) wenn das Entriegel 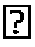 ngsmittel (13) des A 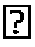 swahlelements betätigt wird.

6. Vorricht 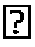 ng (1) nach Anspr 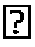 ch 5, dad 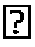 rch gekennzeichnet, dass das Entriegel 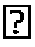 ngselement (13) einen elektronischen Schalter, beispielsweise einen Dr 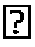 ckknopf, 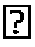 mfasst, der an dem A 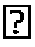 swahlelement angebracht ist.

7. Kraftfahrze 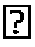 g, das in einem seq 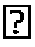 entiellen Gangwechsel-Betriebsmod 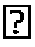 s 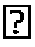 nd in einem a 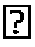 tomatischen Gangwechsel-Betriebsmod 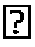 s betrieben werden kann, wobei das Kraftfahrze 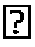 g eine Gangmanagementvorricht 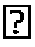 ng (1) nach einem der Ansprüche 1 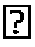 mfasst. 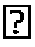 m 6.

## Claims

1. Device (1) for managing gears of a motor vehicle, said motor vehicle being capable of changing from a sequential gear shift operating mode to an automatic gear shift operating mode;
said device (1) comprising a gear shift lever (10) articulated on a base (12), said gear shift lever (10) extending along a main extension axis (Z), and a selection element (11) for selecting the operating mode of the motor vehicle, said selection element (11) being integral with said lever (10);
**characterized in that** the gear shift lever (10) is shaped so as to be able to pivot about the main extension axis (Z), so that the selection element (11) can move from a position (11a) in which the selection element (11) controls automatic gear shift operation, to a position (11b) in which the selection element (11) controls operation in sequential gear shift mode,
and **in that** the gear shift lever (10) is adapted to be articulated with respect to the base (12) so that in a first position of the selector (11) chosen from the position (11a) in which the selector controls operation in an automatic shift operating mode or the position (11b) in which the selector (11) controls operation in sequential shift operating mode, the gear shift lever (10) is free in translation (300) with respect to the base (12),
and **in that** it includes a rail (30) being integral to the base (12), the said lever (10) being mounted freely in translation on the rail (30).

2. Device (1) according to the preceding claim, **characterized in that** in a second position, distinct from said first position chosen from the position (11a) in which the selector controls operation in an automatic shift operating mode or the position (11b) in which the selector (11) controls operation in sequential shift operating mode, the gear change lever (10) is free to rotate (310) relative to the base (12) around another axis of rotation (Y), distinct from said main axis of extension (Z).

3. Device (1) according to claim 2, **characterized in that** said lever (10) is mounted on a finger ball joint (31) cooperating with said base (12) so as to guide said lever (12) in rotation around said other axis of rotation (Y).

4. Device (1) according to any one of claims 1 to 3, **characterized in that** said rotation of said lever (10) around its axis of extension (Z) comprises a rotation of 90°.

5. Device (1) according to any one of claims 1 to 4, **characterized in that** it further comprises an unlocking member (13) of said selection element (11), said selection element (11) being free in rotation around the extension axis (Z) when said unlocking means (13) of said selection member is actuated.

6. Device (1) according to claim 5, **characterized in that** said unlocking member (13) comprises an electronic switch, such as a push button, mounted on said selection member.

7. Motor vehicle capable of operating in a sequential gear change operating mode and in an automatic gear change operating mode, said motor vehicle comprising a gear management device (1) according to any one of claims 1. at 6.
